# EUROPÄISCHE PATENTSCHRIFT

(11) **EP 2 203 334 B1**
(45) Veröffentlichungstag und Bekanntmachung des Hinweises auf die Patenterteilung: **06.06.2012**
(21) Anmeldenummer: 08804477.1
(22) Anmeldetag: 19.09.2008
(51) Int. Cl.: B60T 7/12, B60W 30/18

(54) **ANFAHRASSISTENZSYSTEM MIT VARIABLER BEDINGUNG FÜR DAS LÖSEN DER BREMSE**
HILL HOLD ASSISTANT SYSTEM WITH VARIABLE CONDITION FOR RELEASING THE BRAKE
SYSTÈME D'ASSISTANCE AU DÉMARRAGE À CONDITION VARIABLE POUR LE RELÂCHEMENT DU FREIN

(30) Priorität: 27.09.2007 DE 102007046307
(43) Veröffentlichungstag der Anmeldung: 07.07.2010
(73) Patentinhaber: Robert Bosch GmbH, 70442 Stuttgart (DE)
(72) Erfinder: BRAEUER, Toni, 215021 Suzhou/ Industrial Park (CN)
(86) Internationale Anmeldenummer: PCT/EP2008/062545
(87) Internationale Veröffentlichungsnummer: WO 2009/043740

(56) Entgegenhaltungen:
- EP-A- 0 523 338
- WO-A-02/090158
- DE-A1-102006 000 422

## Beschreibung

### Stand der Technik

Die Erfindung betrifft ein Verfahren zum Unterstützen eines Fahrers beim Anfahren auf einer Steigung gemäß dem Oberbegriff des Patentanspruchs 1, sowie ein Anfahrassistenzsystem gemäß dem Oberbegriff des Patentanspruchs 4.

Fahrerassistenten, die oft auch als Hillholder bezeichnet werden, dienen dazu, einen Fahrer beim Anfahren auf einer Steigung zu unterstützen. Hierzu wird der Bremsdruck im Stillstand des Fahrzeugs in wenigstens einer Radbremse eingesperrt, indem Ventile der Bremsanlage automatisch geschlossen werden. Bei Erkennen eines Anfahrwunsches wird der Bremsdruck automatisch gelöst, so dass das Fahrzeug anfahren kann. Als Bedingung für das Lösen der Bremse ist üblicherweise definiert, dass das Motormoment des Verbrennungsmotors ein bestimmtes Anfahrmoment übersteigen muss. Das Anfahrmoment ist dabei dasjenige Moment, das aufgebracht werden muss, um die Hangabtriebskraft zu kompensieren und das Fahrzeug vorwärts zu bewegen. Aus der EP 0 523 338 A2 ist ein Verfahren zum Steuern einer Bremsvorrichtung gegen Rückwärtsrollen eines Kraftfahrzeugs beim Anfahren am Berg bekannt, bei dem die Bremsvorrichtung jeweils erst dann gelöst wird, wenn das vom Motor/Getriebe aufgebrachte wirksame Antriebsmoment groß genug ist, um das Kraftfahrzeug auch bei gelöster Bremsvorrichtung am Rückwärtsrollen zu hindern.

Aus der DE19950034A1 ist ein Anfahrassistenzsystem bekannt, das den am Rad eingesperrten Bremsdruck automatisch löst, wenn das Motormoment das Anfahrmoment übersteigt.

Im Stillstand des Fahrzeugs werden manchmal elektrische Verbraucher, wie z. B. die Sitzheizung, Klimaanlage, etc. zugeschaltet, oder der Fahrer betätigt beispielsweise die Lenkung. Dies führt dazu, dass das Motor-Steuergerät das Motormoment bzw. die Motordrehzahl erhöht, um die zusätzliche elektrische Leistung bereit zu stellen. Dadurch kommt es vor, dass die genannte Bedingung für das Lösen der Bremse zu früh erreicht wird, noch bevor das zum Anfahren notwendige Antriebsmoment an den Rädern erreicht ist. Das Fahrzeug rollt daher nach dem Lösen der Bremse zurück, woraufhin der Fahrer vermutlich die Bremse erneut betätigen würde.

### Offenbarung der Erfindung

Es ist daher die Aufgabe der vorliegenden Erfindung, ein Anfahrassistenzsystem zu schaffen, das auch bei Zuschalten elektrischer Verbraucher im Stillstand des Fahrzeugs funktioniert.

Gelöst wird diese Aufgabe gemäß der Erfindung durch die im Patenanspruch 1 , sowie im Patentanspruch 4 angegebenen Merkmale. Weitere Ausgestaltungen der Erfindung ergeben sich aus den Unteransprüchen.

Ein wesentlicher Aspekt der Erfindung besteht darin, die Änderung des Motormoments bzw. einer dazu äquivalenten Größe, wie z. B. der Motordrehzahl, (direkt oder indirekt) zu überwachen, und die Bedingung für das Lösen der Bremse anzupassen, wenn eine Änderung erkannt wird, die nicht auf einer Betätigung des Fahrpedals beruht. Die Lösebedingung besteht erfindungsgemäß darin, dass das Motormoment bzw. die äquivalente Größe einen vorgegebenen Schwellenwert übersteigt. Diese Lösebedingung wird nun so angepasst, dass die Bremse erst gelöst wird, wenn das an den Rädern zur Verfügung stehende Antriebsmoment die Hangabtriebskraft kompensiert und das Fahrzeug beim Lösen der Bremse nicht zurück rollt.

Zum Anpassen der Bedingung kann wahlweise der Schwellenwert erhöht und/oder das zum Vergleich herangezogene Motormoment um einen bestimmten Betrag reduziert werden. In beiden Fällen erreicht das Motormoment (oder die äquivalente Größe) bzw. das Vergleichs-Motormoment den Schwellenwert später, und die Bremse wird erst später gelöst.

Das Motormoment bzw. die Motordrehzahl im Stillstand kann mittels einer geeigneten Sensorik ermittelt werden. Diese Größen stehen üblicherweise in einem Motor-Steuergerät zur Verfügung und können von diesem abgefragt werden. Die Betätigung des Fahrpedals kann z. B. mittels eines Fahrpedalsensors gemessen werden.

Das Motormoment bzw. die Motordrehzahl kann alternativ auch indirekt überwacht werden, indem z. B. das Zu- oder Abschalten eines elektrischen Verbrauchers überwacht wird. Wenn ein elektrischer Verbraucher, wie z. B. ein Servomotor oder ein Aggregat einer Klimaanlage zu- oder abgeschaltet wird, erhöht bzw. reduziert das Motor-Steuergerät automatisch die Motordrehzahl. Das Zu- bzw. Abschalten bestimmter Verbraucher führt also zu einer Änderung des Motormoments, die indirekt durch Überwachung des Betriebszustands des elektrischen Verbrauchers bestimmt werden kann.

Das Zu- bzw. Abschalten eines elektrischen Verbrauchers kann beispielsweise durch Leistungs-, Strom- oder Spannungsmessung, durch Überprüfung eines zugehörigen Schalters, Auswertung der in einem Bus-System zur Verfügung stehenden Information oder in anderer Weise überwacht werden.

Gemäß einer bevorzugten Ausführungsform der Erfindung wird der Lenkradwinkel überwacht und die Lösebedingung des Anfahrassistenten angepasst, wenn der Lenkradwinkel bzw. dessen Änderung einen vorgegebenen Schwellenwert überschreitet. Falls der Fahrer das Lenkrad im Stillstand des Fahrzeugs bewegt, wird der Servomotor der Lenkung aktiv. Das Motor-Steuergerät erhöht dann automatisch die Motordrehzahl, um den Servomotor zu versorgen. Aus der Änderung des Lenkradwinkels kann somit auf die Änderung des Motormoments geschlossen werden.

Die quantitative Anpassung der Lösebedingung ist vorzugsweise abhängig von der Höhe der elektrischen Leistung des Verbrauchers. Gemäß einer bevorzugten Ausführungsform der Erfindung wird der Schwellenwert in gleichem Ausmaß erhöht, wie die durch das Zuschalten verursachte Erhöhung des Motormoments.

Die Lösebedingung wird vorzugsweise nur angepasst, wenn die Leistung des elektrischen Verbrauchers bzw. die durch das Zuschalten bedingte Änderung des Motormoments größer ist als ein vorgegebener Schwellenwert. Relevante Verbraucher sind insbesondere Aggregate von Klimaanlagen, der Elektromotor einer Servolenkung oder Aktuatoren anderer Fahrzeugsysteme, sowie Verbraucher mit einer Leistung von z.B. mindestens 50 W.

Ein erfindungsgemäßer Anfahrassistent umfasst im Wesentlichen ein Steuergerät mit einem Algorithmus 7, der dazu ausgelegt ist, einen Aktuator der Bremsanlage so anzusteuern, dass das Fahrzeug automatisch gehalten wird, und der die Bremse bei Erkennen eines Anfahrwunsches automatisch löst, unter der Bedingung, dass das Motormoment bzw. eine dazu proportionale Größe einen vorgegebenen Schwellenwert übersteigt. Der Algorithmus ist dabei derart ausgelegt, dass bei Zuschalten eines elektrischen Verbrauchers, das zu einer automatischen Erhöhung des Motormoments führt, die Bedingung für das Lösen der Bremse entsprechend angepasst wird.

### Kurze Beschreibung der Zeichnungen

Die Erfindung wird nachstehend anhand der beigefügten Zeichnungen beispielhaft näher erläutert. Es zeigen:
- Fig. 1: ein schematisches Blockschaltbild eines Anfahrassistenzsystems;
- Fig. 2: den Verlauf verschiedener Kenngrößen bei einem Anfahrvorgang ohne Anpassung der Lösebedingung, und
- Fig. 3: den Verlauf verschiedener Kenngrößen bei einem Anfahrvorgang mit Anpassung der Bedingung für das Lösen der Bremse.

### Ausführungsformen der Erfindung

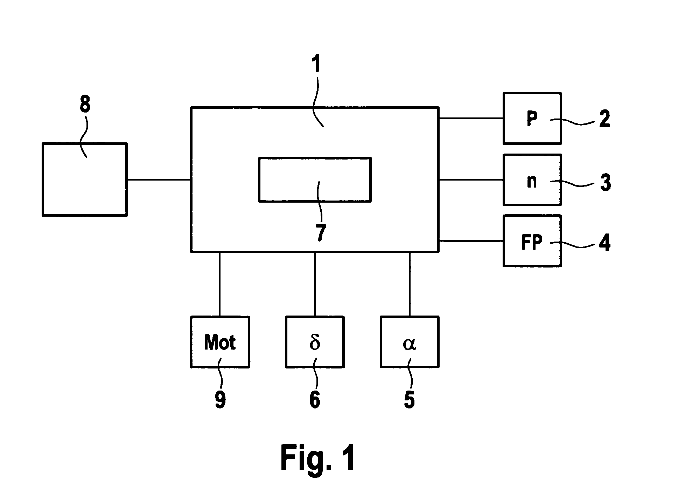

Fig. 1 zeigt ein schematisches Blockschaltbild eines Anfahrassistenzsystems, umfassend ein Steuergerät 1 mit einem Algorithmus 7, der das Einsperren des Drucks an den Radbremsen 8 bzw. das Lösen der Radbremsen 8 steuert. Das Steuergerät 1 ist mit verschiedenen Sensoren 2-6 verbunden, die zur Überwachung des Fahrzustands dienen. Der Algorithmus ist somit in der Lage, eine Fahrsituation zu erkennen, in der das Fahrzeug auf einer Steigung zum Stillstand gekommen ist, oder eine Situation, in der die Bremse wieder gelöst werden soll.

In diesem Ausführungsbeispiel ist der Algorithmus 7 so ausgelegt, dass der Bremsdruck an wenigstens einer Radbremse 8 eingesperrt wird, wenn sich das Fahrzeug im Stillstand befindet, die Steigung der Fahrbahn größer ist als ein vorgegebener Schwellenwert und gleichzeitig die Fußbremse betätigt wird. Der Stillstand des Fahrzeugs kann beispielsweise mittels Drehzahlsensoren 3 gemessen oder anderweitig geschätzt werden. Zur Erkennung einer Betätigung des Fuß-Bremspedals ist ein Pedal sensor 2 vorgesehen. Eine Betätigung des Fuß-Bremspedals könnte wahlweise auch durch Überwachung des Bremsdrucks (Fahrervordruck) erkannt werden. Zur Bestimmung der Fahrbahnsteigung ist ein Neigungssensor 5 vorgesehen. Die Fahrbahnsteigung könnte aber auch in bekannter Weise aus anderen Größen geschätzt werden.

Für das Auslösen des Anfahrassistenten können noch weitere Bedingungen definiert werden, wie z.B. dass der Verbrennungsmotor des Fahrzeugs laufen muss, ein Gang eingelegt sein muss, oder das Fahrpedal nicht betätigt sein darf, etc.. Wenn die vorgegebenen Aktivierungsbedingungen erfüllt sind, steuert der Algorithmus 7 ein oder mehrere Ventile der Bremsanlage 8 an, um den Bremsdruck an wenigstens einem der Räder einzusperren und automatisch zu halten. Falls der vom Fahrer ausgeübte Bremsdruck zu niedrig ist, kann dieser gegebenenfalls noch zusätzlich erhöht werden.

Der Anfahrassistent wird deaktiviert und die Bremse gelöst, wenn ein Anfahrwunsch des Fahrers erkannt wird. Hierzu können wiederum verschiedene Bedingungen vorgegeben werden. Im vorliegenden Ausführungsbeispiel wird der Anfahrassistent deaktiviert, wenn der Fahrer das Fahrpedal betätigt und das Motormoment des Verbrennungsmotors größer ist als ein vorgegebener Schwellenwert. Dieser Schwellenwert ist vorzugsweise so gewählt, dass das Fahrzeug beim Lösen der Bremse nicht zurück rollt.

Der Anfahrwunsch des Fahrers wird hier über einen Fahrpedalsensor 4 erfasst. Das Motormoment wird von einem Motor-Steuergerät 9 zur Verfügung gestellt, das mit dem Steuergerät 1 verbunden ist. Das erforderliche Anfahrmoment kann mit Kenntnis der Fahrzeugmasse und der Fahrbahnsteigung berechnet oder wahlweise auch aus anderen Größen geschätzt werden. Diese Schätzung ist aus dem Stand der Technik hinreichend bekannt.

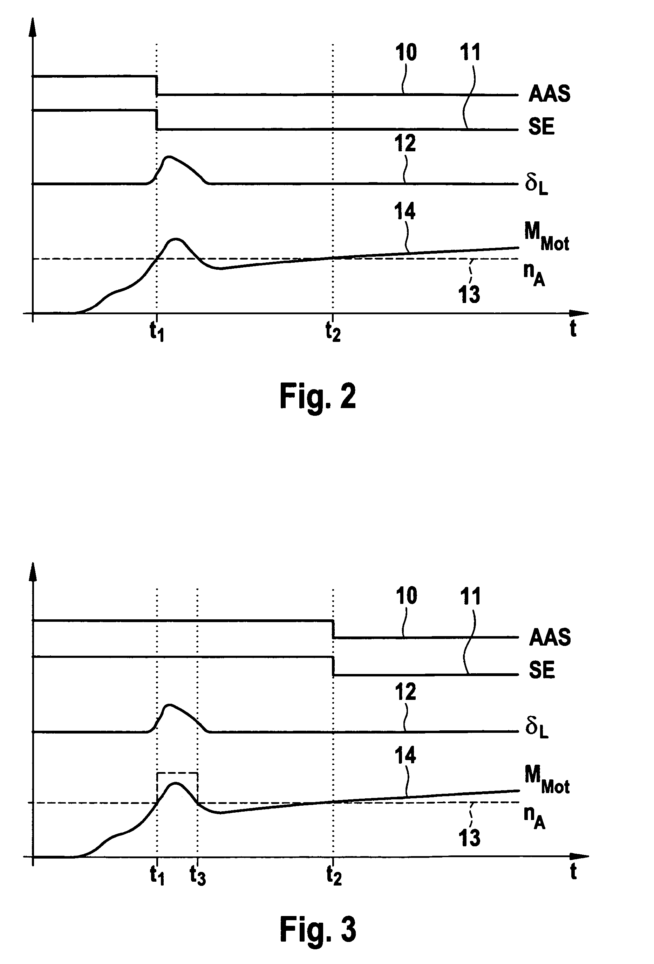

Fig. 2 zeigt den zeitlichen Verlauf verschiedener charakteristischer Größen bei einem Anfahrvorgang. Dabei bezeichnet die Kennlinie 10 den Zustand (aktiv/deaktiv) des Anfahrassistenten, und die Kennlinie 11 den Stillstand des Fahrzeugs (Stillstand/Fahren). Der Verlauf des Lenkradwinkels δ_{L} ist mit 12 gekennzeichnet, das berechnete Anfahrmoment M_{A} mit 13 und das Motormoment M_{Mot} mit 14.

Zu Beginn des Vorgangs ist der Anfahrassistent aktiv (Kennlinie 10 ist high) und das Fahrzeug befindet sich im Stillstand (Kennlinie 11 ist high). Es beginnt dann ein Anfahrvorgang, bei dem der Fahrer zunehmend das Fahrpedal betätigt, wie an Kennlinie 14 zu erkennen ist. Der Fahrer betätigt außerdem das Lenkrad (siehe Kennlinie 12). Die Bewegung am Lenkrad wird in bekannter Weise durch einen Servomotor unterstützt. Dies führt dazu, dass das Motor-Steuergerät 9 die Motordrehzahl leicht erhöht, um eine höhere Leistung für den Betrieb des Servomotors bereit zu stellen. Die Kennlinie 14 zeigt daher eine Überhöhung, die auf dem Zuschalten des Servomotors beruht.

Das Motormoment 14 übersteigt das Anfahrmoment 13 bereits zum Zeitpunkt t₁, also wesentlich früher als ohne Lenkradbetätigung (Zeitpunkt t₂). Der Anfahrassistent wird damit bereits im Zeitpunkt t₁ deaktiviert (siehe Kennlinie 10). Da das an den Rädern zur Verfügung stehende Antriebsmoment im Zeitpunkt t₁ noch nicht ausreicht, um die Hangabtriebskraft zu kompensieren, wird das Fahrzeug zurück rollen.

Fig. 3 zeigt den zeitlichen Verlauf der charakteristischen Größen bei einem Anfahrvorgang, bei dem die zusätzliche Erhöhung des Motormoments 14 aufgrund des Zuschaltens des Servomotors berücksichtigt wird. Zu Beginn des Vorgangs befindet sich das Fahrzeug wieder im Stillstand (Kennlinie 11) und der Anfahrassistent ist aktiv (Kennlinie 10). Der Fahrer betätigt die Lenkung während des Anfahrvorgangs. Wenn die Änderung des Lenkradwinkels eine bestimmte Schwelle überschreitet, wird der Schwellenwert 13 temporär erhöht. Dieser Wert entspricht dabei wenigstens der zusätzlichen Erhöhung des Motormoments 14 aufgrund des Zuschaltens des Servomotors.

Im Zeitpunkt t₁ übersteigt das Motormoment 14 den Schwellenwert 13 daher nicht. Der Fahrer dreht das Lenkrad im weiteren Verlauf wieder zurück in die Ausgangslage (siehe Kennlinie 12). Im Zeitpunkt t₃ unterschreitet der Lenkradwinkel 12 eine bestimmte Schwelle, wodurch der Schwellenwert 13 wieder auf den ursprünglichen Wert zurückgesetzt wird. Das Motormoment 14 steigt im weiteren Verlauf weiter an und überschreitet im Zeitpunkt t₂ den Schwellenwert 13. Die Bremse wird somit erst im Zeitpunkt t₂ gelöst. Das Fahrzeug bewegt sich in diesem Fall nach vorne, da nun genügend Antriebsmoment zur Verfügung steht, um die Hangabtriebskraft zu kompensieren.

## Patentansprüche

1. Verfahren zum Unterstützen eines Fahrers beim Anfahren auf einer Steigung, bei dem das Fahrzeug im Stillstand mittels einer Bremse (8) automatisch gehalten, und die Bremse (8) bei Erkennen eines Anfahrwunsches automatisch unter der Bedingung gelöst wird, dass das Motormoment (14) oder eine dazu äquivalente Größe einen vorgegebenen Schwellenwert (13) übersteigt, **dadurch gekennzeichnet, dass** die Änderung des Motormoments (14) oder der äquivalenten Größe überwacht, und die Lösebedingung modifiziert wird, wenn eine Änderung erkannt wurde, die nicht auf der Betätigung des Fahrpedals (4) beruht,
wobei die Änderung des Motormoments (14) oder der äquivalenten Größe indirekt überwacht wird, indem das Zuschalten eines elektrischen Verbrauchers (15) überwacht, und die Lösebedingung modifiziert wird, wenn ein elektrischer Verbraucher (15) zugeschaltet wurde,
wobei der elektrische Verbraucher ein Aggregat einer Klimaanlage, ein Elektromotor einer Servolenkung oder ein Aktuator eines anderen Fahrzeugsystems ist.

2. Verfahren nach Anspruch 1, **dadurch gekennzeichnet, dass** der Schwellenwert (13) erhöht und/oder das in der Lösebedingung herangezogene Motormoment (14) um einen bestimmten Betrag reduziert wird, wenn eine Änderung des Motormoments (14) oder der äquivalenten Größe erkannt wurde.

3. Verfahren nach einem der vorhergehenden Ansprüche, **dadurch gekennzeichnet, dass** die Lösebedingung nur dann modifiziert wird, wenn die Leistung des elektrischen Verbrauchers (15) und/oder die dadurch verursachte Änderung des Motormoments (14) größer ist als ein vorgegebener Schwellenwert.

4. Anfahrassistenzsystem mit einem Steuergerät, in dem ein Algorithmus (7) hinterlegt ist, der eine Fahrzeugbremse (6) bei Erkennen eines Anfahrwunsches unter der Bedingung automatisch löst, dass das Motormoment (14) oder eine äquivalente Größe einen vorgegebenen Schwellenwert (13) übersteigt, **dadurch gekennzeichnet, dass** der Algorithmus (7) die Änderung des Motormoments (14) oder der äquivalenten Größe überwacht und die Lösebedingung modifiziert, wenn eine Änderung erkannt wurde, die nicht auf der Betätigung des Fahrpedals (4) beruht,
wobei die Änderung des Motormoments (14) oder der äquivalenten Größe indirekt überwacht wird, indem das Zuschalten eines elektrischen Verbrauchers (15) überwacht, und die Lösebedingung modifiziert wird, wenn ein elektrischer Verbraucher (15) zugeschaltet wurde,
wobei der elektrische Verbraucher ein Aggregat einer Klimaanlage, ein Elektromotor einer Servolenkung oder ein Aktuator eines anderen Fahrzeugsystems ist.

## Claims

1. Method for assisting driver in starting on a gradient, in which the vehicle is automatically held in the stationary state by means of a brake (8), and when a request to start is detected the brake (8) is released automatically on condition that the engine torque (14) or a variable which is equivalent thereto exceeds a predefined threshold value (13), **characterized in that** the change in the engine torque (14) or the equivalent variable is monitored and the release condition is modified if a change which is not due to activation of the accelerator pedal (4) has been detected,
wherein the change in the engine torque (14) or the equivalent variable is monitored indirectly by monitoring the actuation of an electric load (15) and the release condition is modified if an electric load (15) has been activated,
wherein the electric load is an assembly of an air-conditioning system, an electric motor of a power steering system or an actuator of another vehicle system.

2. Method according to Claim 1, **characterized in that** the threshold value (13) is increased and/or the engine torque (14) which is used in the release condition is reduced by a specific absolute value if a change in the engine torque (14) or the equivalent variable has been detected.

3. Method according to one of the preceding claims, **characterized in that** the release condition is modified only if the power of the electric load (15) and/or the change which is caused thereby in the engine torque (14) is greater than a predefined threshold value.

4. Hill start assistant system having a control unit in which an algorithm (7) is stored, which algorithm automatically triggers a vehicle brake (6) when a starting request is detected on condition that the engine torque (14) or an equivalent variable exceeds a predefined threshold value, **characterized in that** the algorithm (7) monitors the change in the engine torque (14) or the equivalent variable and modifies the release condition if a change which is not due to the activation of the accelerator pedal (4) has been detected, wherein the change in the engine torque (14) or the equivalent variable is monitored indirectly by monitoring the activation of an electric load (15) and the release condition is modified if an electric load (15) has been activated,
wherein the electric load is an assembly of an air-conditioning system, an electric motor of a power steering system or an actuator of another vehicle system.

## Revendications

1. Procédé d'assistance d'un conducteur lors des démarrages en côte, dans lequel le véhicule est automatiquement maintenu immobile à l'aide d'un frein (8) et dans lequel le frein (8) est automatiquement relâché après identification d'un souhait de démarrage, à condition que le couple du moteur (14) ou une grandeur équivalente dépasse une valeur seuil (13) prédéfinie, **caractérisé en ce que** la variation du couple du moteur (14) ou de la grandeur équivalente est surveillée et que la condition de relâchement est modifiée lorsqu'une variation ne reposant pas sur un actionnement de la pédale d'accélération (4) est détectée ;
la variation du couple du moteur (14) ou de la grandeur équivalente étant surveillée indirectement en surveillant l'activation d'un élément consommateur de courant (15) et la condition de relâchement étant modifiée lorsqu'un élément consommateur de courant (15) est connecté ;
l'élément consommateur de courant étant un agrégat d'une installation de climatisation, un moteur électrique d'une servodirection ou un actionneur d'un autre système du véhicule.

2. Procédé selon la revendication 1, **caractérisé en ce que** la valeur seuil (13) augmente et/ou que le couple du moteur (14) associé à la condition de relâchement diminue d'une quantité déterminée lorsqu'une variation du couple du moteur (14) ou de la grandeur équivalente est détectée.

3. Procédé selon l'une quelconque des revendications précédentes, **caractérisé en ce que** la condition de relâchement n'est modifiée que lorsque la puissance de l'élément consommateur de courant (15) et/ou la variation subséquente du couple du moteur (14) est supérieure à une valeur seuil prédéfinie.

4. Système d'assistance au démarrage équipé d'un appareil de commande dans lequel un algorithme (7) est mémorisé, ledit algorithme déclenchant automatiquement un frein de véhicule (6) à l'identification d'un souhait de démarrage à condition que le couple du moteur (14) ou une grandeur équivalente dépasse une valeur seuil (13) prédéfinie, **caractérisé en ce que** l'algorithme (7) surveille la variation du couple du moteur (14) ou de la grandeur équivalente et modifie la condition de relâchement lorsqu'une variation ne reposant pas sur l'actionnement de la pédale d'accélération (4) est détectée ;
la variation du couple du moteur (14) ou de la grandeur équivalente étant surveillée indirectement en surveillant l'activation d'un élément consommateur de courant (15) et la condition de relâchement étant modifiée lorsqu'un élément consommateur de courant (15) est connecté ;
l'élément consommateur de courant étant un agrégat d'une installation de climatisation, un moteur électrique d'une servodirection ou un actionneur d'un autre système du véhicule.
